# EUROPEAN PATENT SPECIFICATION

(11) **EP 1 139 121 B1**
(45) Date of publication and mention of the grant of the patent: **26.05.2010**
(21) Application number: 01301662.1
(22) Date of filing: 23.02.2001
(51) Int. Cl.: G02B 3/00, G01Q 60/00, G01Q 60/22, G11B 7/00

(54) **Process of producing near-field light generating element**
Verfahren zur Herstellung lichterzeugender Nahfeld-Elemente
Procédé de production d'élements générateurs de lumière en champ proche

(30) Priority: 07.03.2000 JP 2000062407
(43) Date of publication of application: 04.10.2001
(73) Proprietor: Seiko Instruments Inc., Chiba-shi, Chiba (JP)
(72) Inventor: Kasama, Nobuyuki, c/o Seiko Instruments R&D Center, Chiba-shi, Chiba (JP); Oumi, Manabu, c/o Seiko Instruments R&D Center, Chiba-shi, Chiba (JP); Mitsuoka, Yasuyuki, c/o Seiko Instruments R&D Cent, Chiba-shi, Chiba (JP); Maeda, Hidetaka, c/o Seiko Instruments R&D Center, Chiba-shi, Chiba (JP); Kato, Kenji, c/o Seiko Instruments R&D Center Inc., Chiba-shi, Chiba (JP); Niwa, Takashi, c/o Seiko Instruments R&D Center, Chiba-shi, Chiba (JP)
(74) Representative: Sturt, Clifford Mark

(56) References cited:
- EP-A- 0 981 051
- WO-A-99/67648
- DE-A- 19 509 903
- JP-A- 2000 048 393
- US-A- 5 767 891

## Description

The invention relates to process of producing near-field light generating element for using in optical information recording/reproducing device for carry out a high-density information recording and reproducing using near-field light or for using in observation apparatus for carrying out optical observation of a sample.

### Description of the Related Art

It has begun to use or examine near-field light generating element as a near-field light generating element for information recording/reproducing apparatus or as a probe for carrying out optical observation of a sample.

Information recording/reproducing device is now evolving toward a tendency of large scale in capacity and small in size. Accordingly, it is requested to increase the packing density of the record bits to a higher level. As a solution to this, examinations on blue-violet semi conductor laser and SIL (Solid Immersion Lens) are now carried out. However, in these technologies, due to problems of the diffraction limit of light or the like, comparing with conventional packing density, it is expected an increase of only several times thereof. On the other hand, as a technology that handles optical information of a tiny area exceeding the diffraction limit of light, an information recording/reproducing technology using near-field light is expected.

This technology uses near-field light that is generated by virtue of interaction between a micro area and an optical aperture of a size smaller than wavelength of light formed on a near-field light generating element. By virtue of this, it is made possible to handle optical information in an area smaller than optical wavelength that is conceived as the limit for the conventional optical systems. As for reproducing methods of optical information, there are some possible methods. That is, a method in which by virtue of irradiation of light onto the surface of a storage medium, a lot of near-field light gathering around a tiny mark is converted into propagation light by virtue of interaction with a micro aperture (collection mode) and another method in which near-field light generated from a micro aperture is irradiated onto the surface of a storage medium, and scattered light converted by tiny unevenness on the surface of the storage medium recorded with information, or by virtue of interaction with an alteration of an optical constant such as refractive index is detected by a separately disposed optical receiving element (illumination mode).

Recording is carried out by irradiating near-field light generated from the micro aperture onto the surface of the storage medium to change the configuration in a tiny area on the medium (heat mode recording), or to change the reflective index or transmittance in a tiny area (photon mode recording). In these methods, by using a near-field light generating element having an optical micro aperture that exceeds the diffraction limit of light, a high level packing density of the record bits exceeding that of conventional optical information recording/reproducing device is obtained.

In these technologies, structure of information recording/reproducing device using near-field light, generally, substantially identical to a magnetic disk device. They use a near-field light generating element in place of a magnetic head. A near-field light generating element having an optical micro aperture attached to the front end of a suspension arm is maintained to float at a specific height with a flying head technique to access a desired data mark residing on the disk. In order to make the near-field light generating element to track the disk rotating at a high speed, a flexure function is provided thereto to maintain the posture stable according to a wave of the disk.

In the near-field light generating elements thus structured, as a method to feed light to the aperture, such manner has been adopted that an optical fiber or optical wave guide is connected to the near-field light generating element from the top or laterally, or luminous flux emitted from a laser disposed at an upper position of the near-field light generating element is irradiated directly to the near-field light generating element.

Further, as represented by a near-field optical microscope, using an optical fiber probe or a cantilever type optical probe of which aperture is formed sharp with a prepared optical fiber, as in a scanning probe microscopy, while maintaining a relative position to the medium by virtue of interaction such as tunnel current or atomic force generated between the probe and the surface of a sample, recording/reproducing of information or observation is carried out.

Also, it has been proposed to use a plane probe of which aperture is structured in an inverse pyramid in shape by means of anisotropic etching on a silicon substrate. Light incident from the top or laterally is reflected with in an inverse cone-like pyramid structure and near-field light is emitted from the aperture residing at the top thereof. As this probe does not have any sharpened front edge as described above, it is usable as a near-field light generating element of an optical head or probe suitable for a high speed recording/reproducing of information or a high speed observation. The structure of near-field light generating element for the near-field light generating element as described above are prepared by using more than two photomasks for processing the upper face and the bottom face of a substrate and by precisely aligning both sides of the substrate and by means of photo lithography technique.

However, although an optical device or observation apparatus provides an ultra high packing density of less than optical diffraction limit, by virtue of use of near-field light, it has a disadvantage that it is poor in optical efficiency as well as the luminous energy received by the light receiving element is extremely weak.

In order to overcome the disadvantage, conventionally, the intensity of the laser beam to be used is increased. Or, a high NA lens is used for guiding luminous flux to the micro aperture of a near-field light generating element to collect the luminous flux adjacent to the micro aperture, or a ball lens is disposed in the inverse pyramid structure of a plane probe to enhance the optical efficiency.

However, in case where a high NA lens or ball lens is used, an extremely precise positioning between the lens or ball lens and the micro aperture is required. And Further, another problem such as unevenness in quality among the respective lenses or ball lenses and unevenness residing in the micro aperture resulted from preparation thereof.

Consequently, to adjust optical focus to the micro aperture, it is indispensable to adjust each near-field light generating element extremely precisely. Accordingly there is a problem that it is difficult to mass-produce the same resulting in a cause of increase in cost.

To produce the near-field light generating element by means of semiconductor processing, it is necessary to expose on front and rear surfaces of a near-field light generating element substrate in photo processing. Accordingly, conventionally, alignment of photomask is carried out by using a double-analyzer. However, for the near-field light generating element, the accuracy obtained by alignment using the double-analyzer is not sufficient. Accordingly, it is difficult to produce the near-field light generating element integrally. Consequently, the near-field light generating element is prepared in a plurality of components and assembled them while adjusting the position thereof and final fixed into one. However, in this manner, there is a problem such as poor efficiency in mass production resulting an increase of cost.

Further, in case of insufficient adjustment thereof, optical efficiency is decreased, resulting in a failure to obtain a sufficient luminous energy on a light-receiving element. Consequently, there is a problem such that a large error ratio in an optical memory device, whereas in a high speed recording/reproducing device or an observation apparatus the feature such as contrast or SN ratio is drastically decreased.

Accordingly, the invention was made to provide a near-field light generating element having a micro aperture, by producing the near-field light generating element without carrying out an extremely precise positioning between the micro aperture and the lens as well as without using any double-analyzer for photomask during photo processing. Further, the invention was made to provide a near-field light generating element, compact in structure, excellent in mass production, that enables to generate a sufficiently large near-field light from the aperture, to provide an extremely high resolution and high speed regeneration and recording a high contrast and high SN ratio observation as well as a downsized and thinner apparatus.

European Patent Publication No. 1010983 discloses a probe having an optical waveguide which includes an optical waveguide portion having a double hetero structure and comprising a In_{1-x'-y'}Ga_{x'}Al_{y'}N layer, a In_{1-x-y}GaₓAl_{y}N layer, and a In_{1-x"-y"}Ga_{x"}Al_{y"}. layer; and an AlₓGa₁₋ₓN probe portion grown in a conical shape on the In_{1-x-y}GaₓAl_{y}N layer of the optical waveguide portion.

US Patent No. 5767891 discloses an optical probe element for focusing light from a light source into micro light of a diameter not larger than the diffraction limit, including a light transmitting flat substrate and an optical probe formed on one of the surfaces of the flat substrates. The optical probe having a substantially conical light transmitting projection and a reflective film which covers the conical surface of the projection so that the tip of the projection is exposed.

In order to achieve the object, the present invention provides a process of producing a near-field generating element as set forth as claim 1.

Still further, in the process of producing near-field generating element according to the invention, the process thereof may further include a step of forming the optical guide structure having beam-condensing effect.

Therefore, as an optical structure, by forming an optical structure such an a lens that has lens effect, in addition to the advantages described above. It is made possible to condense luminous flux adjacent to the micro-aperture resulting in a higher optical efficiency. Accordingly, it is made possible to provide the near-field light generating element that enables a higher packing density and a faster recording and reproducing easily at a low cost.

Still further, in the process of producing near-field generating element according to the invention, the convex-shaped portion formed in the step of forming convex may be conical in form.

Therefore, in addition to the advantages described above, as the convex-shaped portion is conical in shape, it is made possible to form easily at the front edge thereof a micro-aperture with a smaller diameter resulting in an increase of recording/reproducing (observation) density.

Still further, in the process of producing near-field generating element according to the invention, the convex-shaped portion formed in the step of forming convex may be a convex lens in form having refractive index profile.

Therefor, beam-condensing effect is increased at the convex-shaped portions. In addition to the advantages an described above, as more light is condensed at the micro-apertureit is made possibly to increase the optical efficiency and to provide the near-field light generating element that enables a higher packing density and a faster recording and reproducing easily at a low cost.

Still further, in the process of producing near-field generating element according to the invention, a plurality of micro-apertures may be formed simultaneously at the convex-shaped portion and the vertexes of the convex-shaped portions.

Therefore, in addition to the advantages described above, it is made possible to produce a near-field light generating element that has a plurality of micro-apertures easily. Accordingly, it is made possible to provide the near-field light generating element that enables a higher packing density and a faster recording and reproducing easily at a low coat.

Embodiment of the present invention will now be described by way of further example only and with reference to the accompanying drawings, in which:-
Fig.1 is a schematic diagram illustrating a process of producing near-field light generating element according to a first embodiment of the invention;
FIG.2 is a schematic diagram illustrating another process of producing near-field light generating element according to a fourth example.
FIG.3 is a diagram illustrating a structure of a near-field light generating element according to the first embodiment of the invention;
FIG.4 is a diagram illustrating steps of producing an optical guide structure as part of a near-field light generating element according to the first embodiment of the invention;
FIG.5 is a diagram illustrating steps of producing a near-field light generating element according to the first embodiment of the invention;
FIG.6 is a diagram illustrating steps of producing a near-field light generating element according to a first example which does not form part of the invention as claimed;
FIG.7 is a diagram illustrating a structure of a near-field light generating element according to a second example;
FIG.8 is a diagram illustrating steps of producing a near-field light generating element according to the second example;
FIG.9 is a diagram illustrating steps of producing near-field light generating element according to a third example;
FIG.10 is a diagram illustrating steps of producing near-field light generating element according to a fourth example;
FIG.11 is a diagram illustrating steps of producing near-field light generating element according to a fifth example; and
FIG.12 is a diagram illustrating steps of, producing near-field light generating element according to a sixth example.

Hereinafter, referring to the appended drawings, a detailed description will be made as to the process of producing near-field light generating element of the invention. However, it should be understood that the invention is not limited within the embodiments described hereinafter.

### (First embodiment)

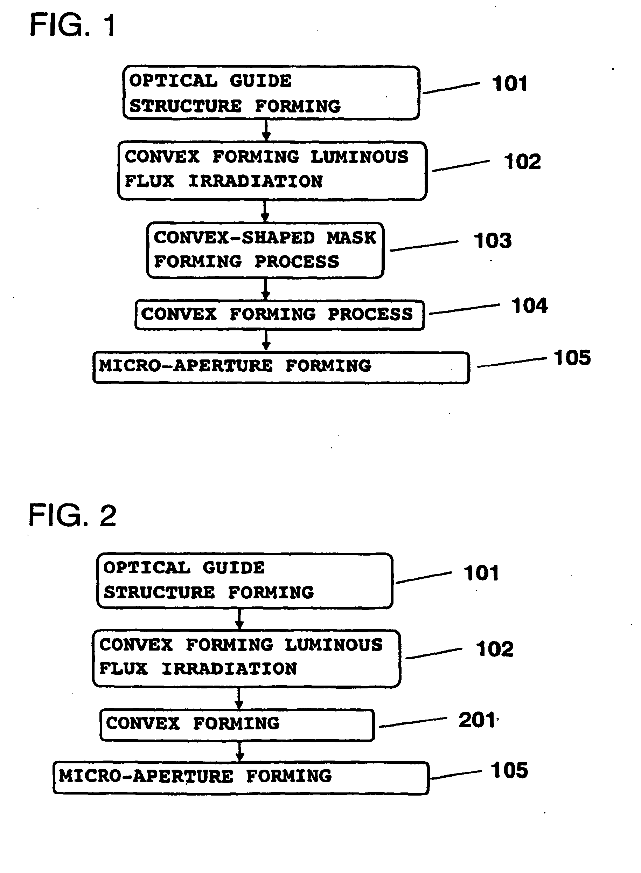

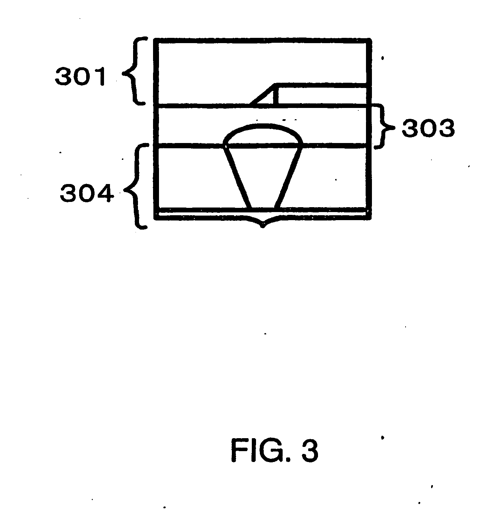

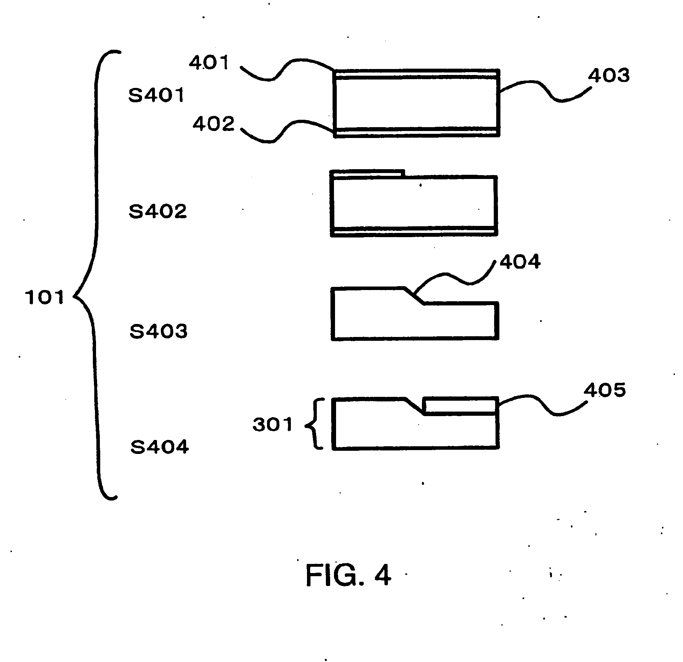

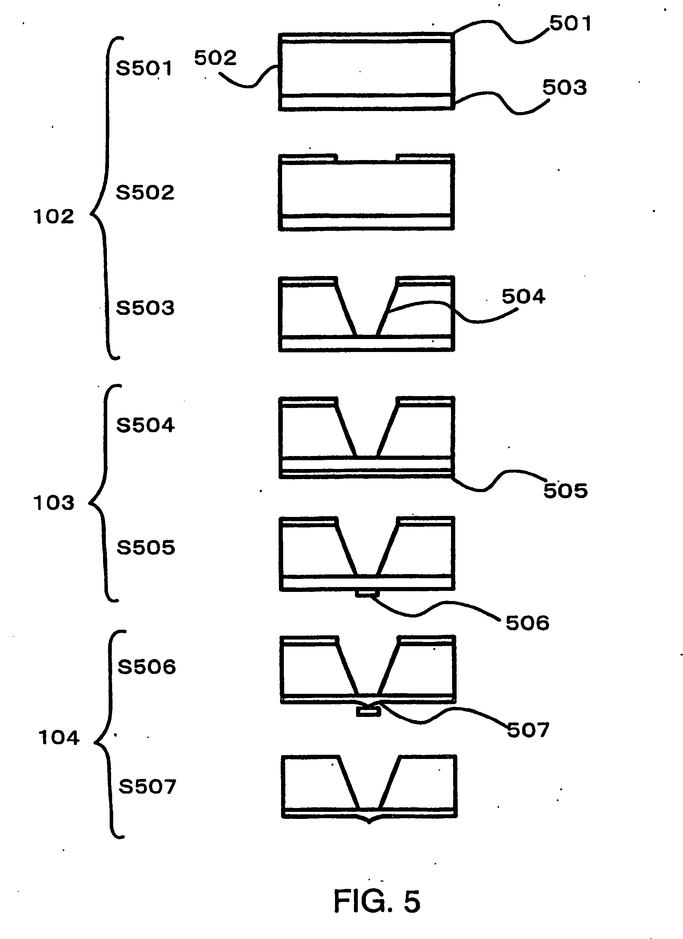

FIG.1 shows a schematic diagram illustrating the process of producing near-field light generating element of a first embodiment of the invention. Also, FIG.3 shows a view of the structure of the near-field light generating element manufactured according to the first embodiment of the process of producing the same. FIG.4 and FIG.5 illustrate the process of producing the same according to the first embodiment.

The process of producing near-field light generating element according to the first embodiment is, as shown in FIG.1, comprised of optical guide structure forming process 101, convex forming luminous flux irradiation process 102, convex-shaped mask forming process 103, convex forming process 104 and micro-aperture forming process 105.

In optical guide structure forming process 101, a optical waveguide substrate 301 that has an optical wave guide shown in FIG. 3 is prepared. Then, after completing convex forming luminous flux irradiation process 102, convex-shaped mask forming process 103, convex forming process 104 and micro-aperture forming process 105, the micro-aperture substrate 304 is prepared. The near-field light generating element shown in FIG.3 prepared by disposing the optical waveguide substrate 301, a plane micro lens 303 and a micro-aperture substrate 304 so that luminous flux emitted from the optical wave guide of the optical waveguide substrate 301 is condensed adjacent to a micro-aperture by the plane micro lens 303.

First, a description will be made about the optical guide structure forming process 101. FIG.4 illustrates the process of producing the Optical waveguide substrate 301 in the optical guide structure forming process. In the step S401, as a substrate, a silicon substrate 403 of single crystal, surface orientation (100), is used. The substrate is laminated with thermal oxide film 401, 402 or a silicon oxide film in the way of CVD or sputtering. As for the masking material, in addition to the above, silicon nitride or anti-alkali melting metals are applicable.

Next, in the stop S402, the mask material is formed with an opening of a desired size by using the technique of the lithography to expose the silicon to be etched.

Next, in the step S403, the silicon substrate 403 is processed with wet etching using potassium hydroxide (KOH) or tetramethylammonuimhydrooxide (TMAH):(CH₃)₄NOH to form a difference in level. And an incline 404 that is a face (111) having angle of 54.7° relative to a face (100) is formed and the masks 401 and 402 is removed.

Next, in the step S404, an optical reflection layer (not shown) is formed by laminating a metal film such as aluminum, silver or gold, or a dielectric multi-layer film so that light propagated laterally to the upper face of the Incline 404 is supplied toward the direction of an aperture. Further, after that, the bottom portion of the difference in level laminated with a quartzose material such as silicon oxide, silicon nitride and dielectric material of macromolecule such as polyamide or polymethyle methacrylate that are the materials for propagating light to the bottom of the difference in level to prepare a material for the optical waveguide 405. In case of silicon oxide as a dielectric material, it is easily to laminate in the way of sputtering, CVD, vacuum deposition. The wave-guide may be formed with a core or a clad that have different refractive index respectively. To make the refractive index of the clad larger than that of the core, it is realized by doping with germanium while forming the core layer. Whereas, clad having refractive index smaller than that of core is realized by doping with fluorine. In these cases, since light is propagated in a manner of total internal reflection with in the core, it is made possible to reduce the propagation loss. After that, the configuration of the optical waveguide 405 is retouched by using a photolithography technique and etching. Using a photolithography technique used in conventional semiconductor production process, patterning is made by laminating a mask material for protecting the etching over the optical wave guide. After that, by carrying out etching the optical wave guide material to remove the mask material, the patterning of the optical waveguide 405 is made.

As described above, the optical waveguide 405 is formed on the optical waveguide substrate 301. However, without forming the optical waveguide at the bottom of the difference of level, it may be replaced with an optical fiber by inserting the same. In this case, preparing a substrate by carrying out the same process from the stop S401 to the step S403 and insert the fiber into the V-shaped groove defined by two faces (111) having an angle of 54.7° relative to the face (100). As the angle of the faces of the V-shaped groove is fixed, it is possible to determine to a desired size when the configuration of the mask for etching is formed. As a result, the position of the optical fiber circular in sectional configuration that is disposed in the V-shaped groove is determined. By virtue of this, the positional accuracy of light irradiated to the optical reflection layer is increased. The fiber is fixed by a way of adhesion with an adhesive or by using anode adhesion after positioning the fiber in place. In the substrate shown in FIG.4, light is reflected by the incline that is formed by carrying out etching on a metal laminated on the substrate or a dielectric material such as silicon oxide or silicon nitride into a tapered shape.

Next, referring to FIG.5, a description will be made about the convex forming luminous flux irradiation process 102. In the step S501, a silicon substrate 502 of single crystal, surface orientation (100), is used for the substrate. Single crystal silicon of surface orientation (110), (111), a dielectric crystal such as glass or quartz, or a semiconductor crystal such as GaAs, may be also used. A laminated layer of a TEOS film 503 that is a kind of silicon nitride is formed in the way of CVD. As other materials, a quartz one material such as silicon oxide or silicon nitride that has a high optical transmittance, or, a dielectric material of macromolecule such as polyamide or polymethyle methacrylate may be used. After that, a thermal oxide film 501 or a film of silicon oxide is formed for masking in the way of CVD or sputtering. As a mask material, in addition to the above, a silicon nitride or anti-alkali melting metals may be used.

Next, in the step S502, a window of a desired size formed in the way of lithography technique using a photomask to expose the silicon to be etched.

After that, in the step S503, a large hole Tapered portion 504 is formed by carrying out wet etching on the Silicon substrate 502 using potassium hydroxide (KOH) or tetramethylammonuimhydrooxide (TMAH):(CH₃)₄NOH. Since the etching rate of the face (111) is slow, a hole of an inverse conical in configuration defined by four inclines of 54.7° is formed. The tapered portion 504 extends up to the TEOS film 503 through the Silicon.

Next, referring to FIG.5, a description will be made about the convex-shaped mask forming process 103.

In the step S504, first of all, a resist film 505 is formed on the surface of the TEOS film 503 on the substrate prepared in the step S503.

To the substrate prepared in the step S504, luminous flux for exposing a resist film 505 ia irradiated through the tapered portion 504. The luminous flux has a high transmittance relative to the TEOS film 503, and a low transmittance relative to the silicon substrate 502 as well as includes a wavelength that is capable to expose the resist film 505. Since the tapered portion 504 extend up to the TEOS film 503 through the silicon, the luminous flux irradiated to the tapered portion 504 transmits the transparent TKOS film 503 and reaches up to the resist film 505. By the luminous flux reached up to the resist film 505, the resist film 505 is exposed to the same. After that, in the step S505, a mask 506 is prepared in the way of photography technique. It is necessary the mask 506 has a configuration suitable to the property of the etching. Detailed description will be made in the next process. Also, in case where a near-field light generating element is used as a flying head commonly used in HDD or the like, a mask having a necessary structure for the flying head may be prepared by exposing the TEOS film 503 again using the photolithography technique.

Next, referring to FIG.5, a description will be made about convex forming process 104.

Based on the mask 506 prepared in the step S505, in the step S506, a part of the TEOS film 503 is processed into a conical shape as the convex-shaped portion in the way of chemical etching. This portion is a convex-shaped portion 501 in FIG.5.

In case where wet etching is use, which is not part of the present invention by controlling the configuration of the mask and the speed of under etching under the mask, the convex-shaped portion 507 of the TEOS film. This utilizes the isotropy of the wet etching. By controlling the speed of the under etching, it is made possible to form the convex-shaped portion 507 conical in shape that has a desired taper angle. In case where photoresist is used as the mask, by controlling roughness of the surface of the TEOS film, type of the resist, the coat manner or baking temperature to optimize the contact level between the TEOS film and the resist a desired taper angle is formed. As for wet etching agent, a mixture of hydrofluoric acid and ammonium fluoride is used.

Further, in case where dry etching is used, which does indeed form part of the invention as claimed, as the etching of the TEOS film 503 proceeds while the configuration of the mask is transferred, it is necessary to provide previously a convex shape to the mask. To form the configuration of the mask as described above, when carrying out an exposure to the photoresist, luminous energy adjacent to the center of the tapered portion 504 is made higher to form a mask of which center has a convex shape. By virtue of the mask thus formed, it is made possible to process the TEOS film 503 conically into a convex-shape in configuration. Furthermore, in case where sputtering dry etching is used, the process of preparation is different from the above. The TEOS film 503 is previously prepared into a quadratic prism or a trapezoid in configuration. After that, by carrying out sputtering etching, the corners only of the quadratic or trapezoid are removed, and a projection that has a shape front end is formed. After processing the TEOS film 503, unnecessary mask is removed in the step S507 after processing TBOS film 503.

Finally, a description will be about micro-aperture forming process 105. The surface of the TEOS film 503 having the convex-shaped portion 507 prepared in the step S507 is laminated with a metal film. In a way of vacuum of evaporation, a metal film such as gold, silver or aluminum that has a high reflectance is formed. By setting the evaporation conditions to a high deposition rate, it is made possible to form a film with a small grain size. As for coating method, sputtering or ion plating may be used to form the film. By forming the metal film, it is made possible to guide a larger part of light to the front end by reflecting the light even when the light irradiated from the upper hit the inclines of the convex-shaped portion 507. After that, the metal film at the front end of the convex-shaped portion 507 is processed to form a micro-aperture. By carrying out deposit of metal film from a direction at an angle relative to the substrate under a high directional dependent film forming conditions, thickness of the film is apt to become thinner toward the front end relative to the thickness of the incline on the convex-shaped portion 507. By carrying out etching on the metal film that has such distribution of thickness as described above, it is made possible to form a micro-aperture.

Further, as another method, it is possible to form a micro-aperture by forming a mask first over the upper face of the metal film that has a hole equal to the micro-aperture at the front end, and then carrying out etching selectively the metal film at the front end only. In this case, as a mask for the etching, a photoresist prepared by spin-coat so that only the metal film at the front end is exposed without being applied with coating, or a mask formed with a hole equal to the micro-aperture by carrying out etching on a dielectric material of which front end only is formed thinner by a way of CVD may be used.

Furthermore, as a still another method of forming the micro-aperture, the micro-aperture may be formed by pressing plane plate made of a material harder than the metal film against the metal film from the upper of the front end of the convex shaped portion and applying a specific weight to deform the configuration of the front end of the metal film flatly in accordance with the frame of the plate so that the TEOS film under the metal film is exposed resulting in a micro-aperture being thus formed. In this case, without a plane plate, the micro-aperture may be formed by pressing a frame of which front is protruded or a ball-like configuration against the front end to deform the metal film in accordance with the frame. Finally, a protection dielectric film is formed on the upper face of the metal film. The protection film is formed less than 30nm in thickness. By forming the dielectric film, it is made possible to prevent the metal film from decreasing of reflectance or leaking of light due to oxidization by aging, or leakage of light due to a peeling-off light reflection film caused from contact with medium. In some cases, this step may be omitted.

After being thus prepared, the two substrates are fixed so that the plane micro lens 303 is sandwiched there between as shown in FIG.3. As a result, luminous flux fed to the optical waveguide on the optical waveguide substrate 301 is diffused from the outgoing end of the optical waveguide and reflected on the incline on the optical waveguide substrate 301. After that, the luminous flux condensed at the micro-aperture by transmitting through the plane micro lens 303. Thus, near-field light is formed adjacent to the micro-aperture. When a storage medium or a sample is positioned close to the micro-aperture, by virtue of interaction among the micro-aperture the storage medium and the Sample, the near-field light is converted into propagation light. By receiving the propagation light with a light-receiving element, it is made possible to reproduce information stored in a storage medium, or to observe optical characteristic of the surface of the sample. Further, as for recording onto a storage medium, it is provided by positioning a storage medium and the micro-aperture close to each other, move the near-field light generating element that has the micro-aperture at a desired position on the storage medium, and by irradiating the near-field light from the micro-aperture onto the storage medium to record information.

The embodiment of the invention described hereinbefore is for a case where the convex-shaped portion formed with the micro-aperture is only one. In the same manner, it is possible to prepare simultaneously a plurality of convex-shaped portions formed with the micro-aperture.

Therefore, as described hereinbefore, according to the process of producing near-field light generating element of the embodiment of the invention, to form the convex-shaped portion, it is not necessary to prepare two photomask for forming the convex-shaped portion and the tapered portion for guiding luminous flux coming from the upper of the near-field light generating element substrate to the convex-shaped portion. Further, by using the process for forming the convex-shaped portion of the invention, as the vertex of the convex-shaped portion and the axis of the luminous flux coming from the optical guide structure always coincide with each other, the both of the micro-aperture formed at the vertex of the convex-shaped portion and the axis of the luminous flux coming from the optical guide structure coincide with each other. Therefore, it is not necessary to carry out positioning. Accordingly, as it is not necessary to carry out extremely precise positioning, the performance of the near-field light generating element is prevented from decreasing such as a decrease of optical efficiency due to positional displacement. Still further, as the photomask used in the silicon processing of the near-field light generating element production can be reduced in number, it is possible to provide the near-field light generating element that is excellent in mass production at a low cost. Still further, as it is made possible to form the micro-aperture on a plurality of convex-shaped portion, by using the near-field light generating element, a faster recording/reproducing of information and observation apparatus is provided.

### [first Example]

The process of producing near-field light generating element according to a first example is, as shown in FIG. 1, comprised of optical guide structure forming process 101, convex forming luminous flux irradiation process 102, convex-shaped mask forming process 103, convex forming process 104 and micro-aperture forming process 105. Except the micro-aperture substrate 304 shown in FIG.3, as the second embodiment is the exactly same as the first embodiment, a part of description will be omitted or will be made just simply.

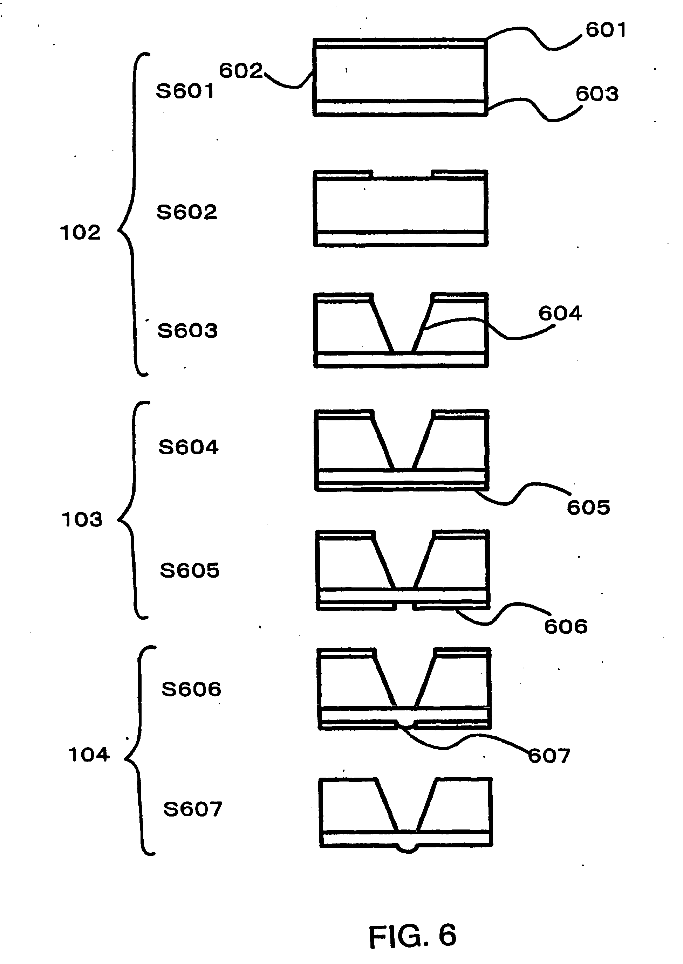

FIG.6 shows a diagram illustrating the process of producing near-field light generating element according to the first example.

As for the optical guide structure forming process 101, as it is the same as the first embodiment, a description thereof is omitted.

Next, referring to FIG.6, a description will be made about the convex forming luminous flux irradiation process 102. In the step S601, a silicon substrate 602 of single crystal, surface orientation (100), is used for the substrate. While doping the silicon oxide with alkali ion (for example, Na, K) as an impurity, form a dielectric film 603 to laminate in a way of CVD or sputtering. Or, the dielectric film 603 may be formed on the silicon substrate 602 after splicing the silicon substrate and the glass substrate and grinding the glass substrate up to an appropriate thickness.

After that, laminate the substrate with a thermal oxide film 601 or a silicon oxide film as a mask in a way of CVD or sputtering. As for mask-material, in addition to the above, silicon nitride or anti-alkali melting metals may be used. Further, in case of necessary, laminate the surface of the dielectric film 603 with a mask material as a protection film of the dielectric film 603 while carrying out wet etching on the silicon substrate 602. Next, in the step S602, form a window of a desired size on the mask material using the lithography technique to expose the silicon to be etched. Then, in the step S603, a large hole tapered portion 604 is formed by carrying out wet etching on the silicon substrate 602 using potassium hydroxide (KOH) or tetramethylammonuimhydrooxide (TMAH):(CH₃)₄NOH. Since the etching rate of the face (111) is slow, a hole of an inverse conical in configuration defined by four inclines of 54.7° is formed. The tapered portion 604 extends up to the dielectric film 603 through the silicon.

Next, a description will be made about the convex-shaped mask forming process 103.

First of all, in the step S604, a resist film 605 is formed on the surface of the dielectric film 603. Then, in the step S605, luminous flux for exposing a resist film 605 is irradiated through the tapered portion 604. The luminous flux has a high transmittance relative to the dielectric film 603, and a low transmittance relative to the silicon substrate 602 as well as includes a wavelength that is capable to expose the resist film 605. Since the tapered portion 604 extend up to the dielectric film 603 through the silicon, the luminous flux irradiated to the tapered portion 604 transmits the transparent dielectric film 603 and reaches up to the resist film 605. By the luminous flux reached up to the resist film 605, the resist film 605 is exposed to the same. All resist film excluding the exposed resist film is removed. Next, a metal film (for example, (Ti) is formed in a way of sputtering or vacuum evaporation. The metal mask 606 formed with an aperture is thus prepared by removing unnecessary resist film to remove the metal film remaining on the resist film. Also, in case where a near-field light generating element is used as a flying head commonly used in HDD or the like, a mask having a necessary structure for the flying head may be prepared by exposing the dielectric film 603 again using the photolithography technique before forming the metal film.

Next, a description will be made about the convex forming process 104.

In the step S606, by immersing the substrate having the mask 606 prepared in the step S605 into fused-salt, ions are exchanged through the aperture of the mask 606 between the ion (T1 etc) that contributes to a high refractive index and alkali ion within the glass and a lens area is formed. The ions dispersed within the glass substrate come in concentric circular through the aperture of the mask and have a third dimensional density distribution. At that time, a swell is formed around the center by virtue of differences in ion radius resulting in the convex-formed portion 607. That is to say, the convex-formed portion 607 comprised of a combination of a lens of refractive index profile and a convex-lens . Then, in the step S607 unnecessary metal mask 606 is removed.

As for micro-aperture forming process 105, the substrate prepared in the step S607 is laminated with a metal film as light shielding film and formed with a micro-aperture. As the process of preparing the same is exactly same as the first embodiment, a description thereof is herein omitted.

The two substrates prepared as described above are assembled and fixed in a way same as the first embodiment shown in FIG.3. The manner how to guide light to the micro-aperture, how to record information, how to reproduce the same, and how to observe optical characteristic of the surface on the sample are the exactly same as the first embodiment.

The example described hereinbefore is for a case where the convex-shaped portion formed with the micro-aperture is only one. In the same manner, it is possible to prepare simultaneously a plurality of convex-shaped portions formed with the micro-aperture.

Therefore, as described hereinbefore, according to the process of producing near-field light generating element of the first example, in addition to the advantages of the first embodiment, beam-condensing effect at the convex-shaped portion is expected. In addition to the advantages above described, as the light is condensed more densely at the micro-aperture, the optical efficiency is increased. Accordingly, it is made possible to provide a near-field light generating element capable to increases the packing density and a faster recording/reproducing of information easily at a low cost.

### [Second Example]

The process of producing near-field light generating element according to a second example is, as shown in FIG. 1, comprised of optical guide structure forming process 101, convex forming luminous flux irradiation process 102, convex-shaped mask forming process 103, convex forming process104 and micro-aperture forming process 105. As the second example is a case in which the plane micro-lens and the micro-aperture substrate are prepared, integrally on one substrate as described in the first embodiment and first example, a part of description will be omitted or will be made just simply.

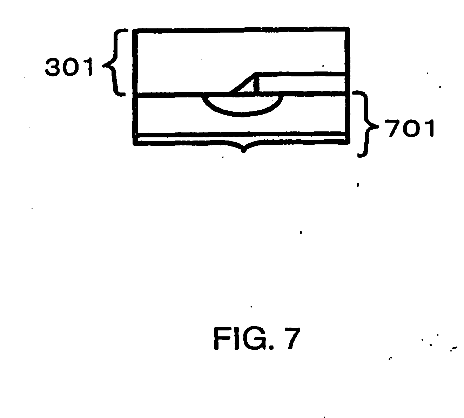

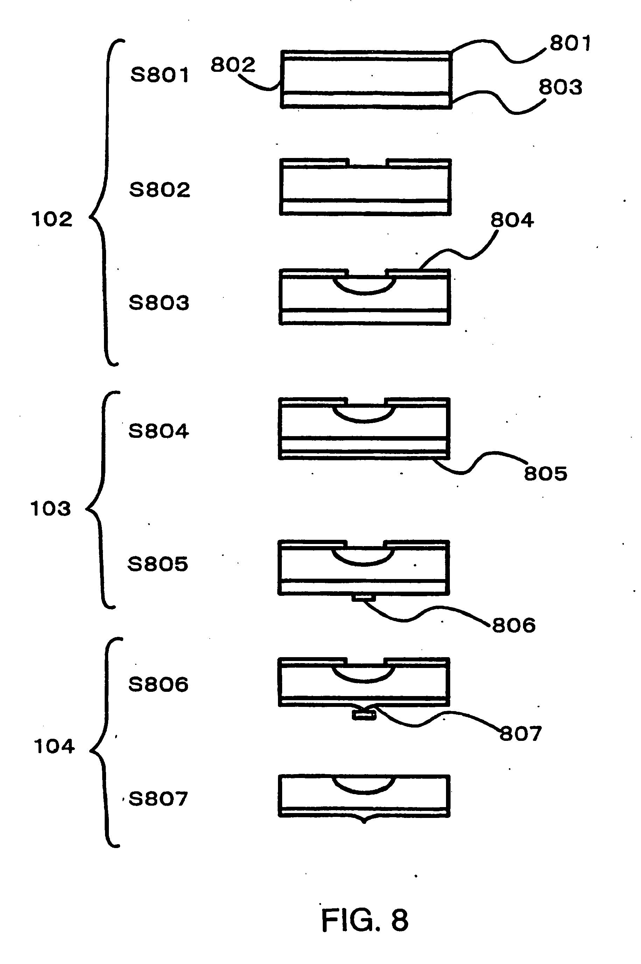

FIG. 7 shows a schematic diagram illustrating the near-field light generating element according to the second example. FIG.8 illustrates the process of producing of the near-field light generating element according to the second example.

As for the optical waveguide substrate 301 prepared in the optical guide structure forming process 101, as it is the exactly same as the first embodiment shown in Fig.4, a description thereof is omitted. Next, referring to FIG.8, a description will be made about the convex forming luminous flux irradiation process 102. In this step, in order to irradiate exposure luminous flux to the convex-shaped portion, a plane micro lens is formed to the glass substrate 802. In the step S801, a laminated layer of a TEOS film 803 that is a kind of silicon oxide on the glass substrate is formed in the way of CVD. As other materials, a quartz one material such as silicon oxide or silicon nitride that has a high optical transmittance, or, a dielectric material of macromolecule such as polyamide or polymethyle methacrylate may be used. Next, the surface of the glass substrate 802 opposite side of the side formed with the TEOS film 803 with metal film as a mask material 801. The Mask material 801 is formed in way of vacuum evaporation or sputtering. At this time, in case of necessity, a protection film may be formed on the TEOS film 803 while preparing a reflective index profile lens on the glass substrate 802.

Next, in the step S802, using a photolithography technique, a circular hole is formed on the mask material 801 to expose glass substrate 802 as the mask 804. Next, in the step S803, by immersing the glass substrate 802 in fused-salt, selective ion exchange is made. The ions dispersed within the glass substrate come in concentric circular through the aperture of the mask and have a third dimensional density distribution. As a result, the substrate that has a refraction index gradient proportional to this distribution is formed. The refraction index gradient has a lens effect; accordingly, a plane micro lens is formed on the glass substrate 802.

Next, a description will be made about convex-shaped mask forming process 103 in the step S804, the glass substrate 802 formed with a plane micro lens in the step S803 is laminated with a resist film 805 on the surface of a TEOS film 803. Then, luminous flux for exposing a resist film 805 is irradiated from the upper of the plane micro lens toward the glass substrate 802. The luminous flux has a high transmittance relative to the TEOS film 803, and a low transmittance relative to the Mask 804 as well as includes a wavelength that is capable to expose the resist film 805. The exposure luminous flux fed to the glass substrate 802 is condensed by the plane micro lens and transmits through the transparent TEOS film 803 and reaches the resist film 805. By the luminous flux reached to the Resist film 805, the resist film 805 is exposed.

After that, in the step S805, using a photolithography technique, a mask 806 is formed. Although it is not shown in the figure, in case where a near-field light generating element is used as a flying head commonly used in HDD or the like, a mask having a necessary structure for the flying head may be prepared by exposing the TEOS film 803 again using the photolithography technique.

Next, a description will be made about the convex forming process 104.

Based on the mask 806 prepared in the step S805, in the step S806, a part of the TEOS film 803 is processed into a conical shape as the convex-shaped portion in the way of chemical etching. This portion is a convex-formed portion 807. As for etching method, as it is the same as the first embodiment, a description thereof is omitted. After forming the convex-shaped portion by processing the TEOS film 803, in the step S807, unnecessary mask is removed.

Finally, a description will be made about the micro-aperture forming process 105.

The surface of the TEOS film 803 having a convex-formed portion 807 formed in the step S807 is laminated with metal film. After that in the same way as described in the first embodiment and first example, a micro-aperture is formed to the metal film on the convex-formed portion 807. Further, dielectric film is formed on the upper surface of the metal film as a protection film same as the first and second embodiments.

After being thus prepared, the micro opening substrate with plane micro lens 701 is fixed to an optical waveguide substrate 301 as shown in FIG. 3. As a result, luminous flux fed to the optical waveguide on the optical waveguide substrate 301 is diffused from the outgoing end of the optical waveguide and reflected on the incline on the optical waveguide substrate 301. After that, the luminous flux condensed at the micro-aperture by transmitting through the micro opening substrate with plane micro long 701. Thus, near-field light is formed adjacent to the micro-aperture. When a storage medium or a sample is positioned close to the micro-aperture, by virtue of interaction among the micro-aperture the storage medium and the Sample, the near-field light is converted into propagation light.

The manner how to guide light to the micro-aperture, how to record information, how to reproduce the same, and how to observe optical characteristic of the surface on the sample are the exactly same as the first embodiment.

The example described hereinbefore is for a case where the convex-shaped portion formed with the micro-aperture is only one. In the same manner, it is possible to prepare simultaneously a plurality of convex-shaped portions formed with the micro-aperture.
Therefore, as described hereinbefore, according to the process of producing near-field light generating element of the second example, to prepare the convex-shaped portion, it is not necessary to prepare two masks for forming the convex-shaped portion and for forming the plane micro-lens formed on the near-field light generating element substrate. Additionally, by using the process for producing the convex-shaped portion, as the vertex of the convex-shaped and the axis of the luminous flux coming from the optical guide structure always coincide with each other, the micro-aperture formed at the vertex of the optical propagation component formed convex-shaped in shape and the axis of the luminous flux coming from the optical structure coincide with each other, and accordingly, it is not necessary to carry out positioning. Therefore, it is not necessary to carry out extremely precise positioning between the micro-aperture and the axis of the luminous flux condensed by the plane micro-lens, it is made possible to prevent the performance of the near-field light generating element from decreasing such as a decrease of optical efficiency due to positional displacement. Further, as number of masks used in the process of producing the near-field light generating element is reduced, it is made possible to provide a near-field light generating element excellent in mass production at a low cost.

### [Third Example]

The process of producing near-field light generating element according to a third example is, as shown in FIG. 1, comprised of optical guide structure forming process 101, convex forming luminous flux irradiation process 102, convex-shaped mask forming process 103, convex forming process 104 and micro - aperture forming process 105. As the third example is a case in which a convex-shaped substrate is used in place of the plane micro-lens substrate described in the second example, a part of description will be omitted or will be made just simply.

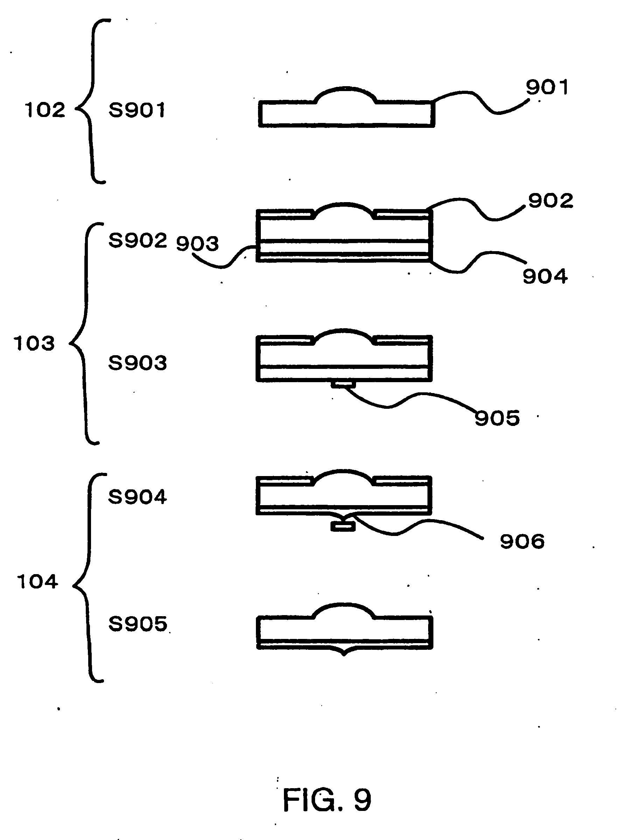

FIG. 9 shows a diagram illustrating process of producing near-field light generating element according to the third example.

As for the optical guide structure forming process 101, as it is exactly same as the second example, a description thereof is omitted.

Next, a description will be made about the convex forming luminous flux irradiation process 102. In this process, in order to irradiate exposure luminous flux to the convex-shaped portion, a convex lens substrate 901 is prepared. The Convex lens substrate 901 used in the step S901 is prepared by applying resist on the glass substrate first, then, by etching the glass substrate under an etching condition that the selective ratio between the glass and the resist after forming resist formed into a lens shape by means of lithography using gray scale mask having a tone or immersion mask by way of a exposure and development. As a result, the configuration of the resist is transferred to the substrate and the resist is completely etched on the glass substrate. Thus the convex lens substrate 901 is prepared.

Next, a description will be made about the convex-shaped mask forming process 103.

In the step S902, first of all, in order to shield the portion other than the convex-shaped portion of the convex lens substrate 901, a mask 902 is formed for the convex lens substrate 901. Then a TEOS film 903 is formed on the side opposite to the side formed with the convex lens of the convex lens substrate 901. Then, on the surface of the TEOS film 903, a resist film 904 is formed. Next in order to shield the exposure luminous flux that transmits the portion other than the convex lens portion, a mask 902 is formed. After that, from the upper of the convex lens, luminous flux to expose the resist film 904 is irradiated on the lens substrate 901. The luminous flux described above has a high transmittance relative to the TEOS film 903 and a low transmittance relative to the mask 902 as well as includes a wavelength capable to expose the resist film 904. Same as the third embodiment, the luminous flux fed to the convex substrate 901 is condensed by the convex lens and transmits the resist film 904 resulting in exposure of the resist film

After that, in the step S903, using a photolithography technique, a mask 905 is formed. Although it is not shown in the figure, in case where a near-field light generating element is used as a flying head commonly used in HDD or the like, a mask having a necessary structure for the flying head may be prepared by exposing the resist film 904 again using the photolithography technique.

Next, a description will be made about the convex forming process 104.

Based on the mask 905 prepared in the step S903, in the exactly same manner as the first embodiment, a convex-formed portion 906 is formed by means of a chemical etching. In the step S905, by removing the TEOS film 903, unnecessary mask is removed.

Next, a description will be made about the micro-aperture forming process 105.

On the surface of the TEOS film 903 having a convex-formed portion 906 prepared in the step S905, metal film is formed. Then, in the same manner as described in the first embodiment, a micro-aperture is formed to the metal film of the mask 905. Also same as the first embodiment, on the metal film, a dielectric film is formed as a protection film.

The convex lens substrate having a micro-aperture prepared as described above is, in place of the micro opening substrate with plane micro lens 701 shown in FIG. 7, spliced with the optical waveguide substrate 301. Accordingly, same as the second example, it is made possible to reproduce the information stored in a storage medium and to write the same onto a storage medium.

The example described hereinbefore is for a case where the convex-shaped portion formed with the micro-aperture is only one. In the same manner, it is possible to prepare simultaneously a plurality of convex-shaped portions formed with the micro-aperture.

Therefore, as described hereinbefore, according to the process producing near-field light generating element of the second example, to prepare the convex-shaped portion, it is not necessary to prepare a photomasks for forming the convex-shaped portion and for forming the plane micro-lens formed on the near-field light generating element substrate. Additionally, by using the process for producing the convex-shape portion, as the vertex of the convex-shaped and the axis of the luminous flux coming from the optical guide structure always coincide with each other, the micro-aperture formed at the vertex of the optical propagation component formed convex-shaped in shape and the axis of the luminous flux coming from the optical structure coincide with each other, and accordingly, it is not necessary to carry out positioning. Therefore, it is not necessary to carry out extremely precise positioning between the micro-aperture and the axis of the luminous flux condensed by the plane micro-lens, it is made possible to prevent the performance of the near-field light generating element from decreasing such as a decrease of optical efficiency due to positional displacement. Further, as number of photomasks used in the process of producing the near-field light generating element is reduced, it is made possible to provide a near-field light generating element excellent in mass production at a low cost.

### [Fourth Example]

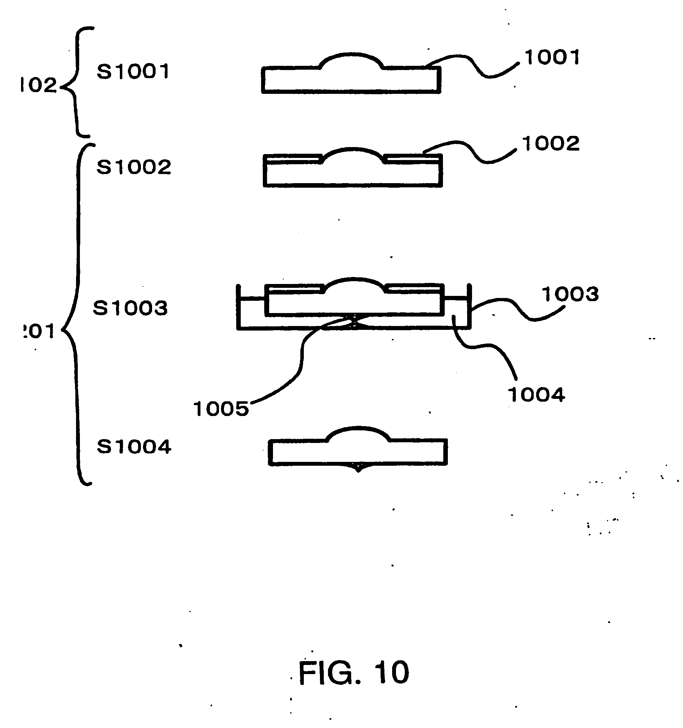

FIG. 2 shows a schematic diagram illustrating another process of producing of near-field light generating element. The structure of the near-field light generating element prepared according to the fourth example. Same as the second example, is a case in which a substrate having a micro-aperture shown in FIG.10 is used in place of the micro opening substrate with plane micro lens 701 with a plane micro-lens as a near-field light generating element shown in FIG.7, a part of description will be omitted or will be made just simply.

The process of producing near-field light generating element according to the fourth example includes optical guide structure forming process 101, convex forming luminous flux irradiation process 102, convex forming process 201 and micro-aperture forming process 105 as shown in FIG.2.

As for the optical guide structure forming process 101 it is exactly same as the second and third examples.

Referring to FIG.10, in the convex forming luminous irradiation process 102, a convex lens substrate 1001 is prepared to irradiate exposure luminous flux to the convex-shaped portion. As it is the exactly same as the process of preparing the convex lens substrate described in the third-example, a description thereof is omitted.

Next, referring to FIG.10, a description will be made about the convex forming process 201.

In the step S1002, first of all, in order to shield the portion other than the convex lens of the convex lens substrate 1001, a mask 1002 is formed. Then, in the step S1003, the convex lens substrate 1001 is disposed so that the side opposite to the side formed with the convex lens is immersed in optical hardening resin 1004 filled in a case 1003. Then, luminous flux for hardening the optical hardening resin 1004 is irradiated from the upper of the convex lens to the convex lens substrate 1001. A mask 1002 is disposed in order to shield luminous flux that transmits through other than the convex lens. The luminous flux is condensed by the convex lens and the optical hardening rein 1004 begins to be hardened by the luminous flux by the condensed luminous flux. When the optical hardening resin 1004 has sufficiently been hardened, a convex-formed portion 1005 shown in the step S1003 has been formed in the optical hardening resin. Then, after turning off the luminous flux from irradiating, the convex lens substrate 1001 is removed from the optical hardening resin 1004. When unnecessary mask 102 is removed, the convex lens substrate 1001 having the convex-formed portion 1005 is formed as shown in the step S1004.

Finally, a description will be made about the micro-aperture forming process 105.

On the surface of the convex lens substrate 1001 prepared in the step S1004 at the side of the convex-shaped portion 1005, metal film is formed to laminate the same. Then, in the same manner described in the first embodiment, a micro-aperture is formed to the metal film on the convex-shaped portion 1001. Also, same as the first embodiment, on the upper surface of the metal film. dielectric film is formed as a protection film.

The embodiment of the invention described hereinbefore is for a case where the convex-shaped portion formed with the micro-aperture is only one. In the same manner, it is possible to prepare simultaneously a plurality of convex-shaped portions formed with the micro-aperture.

The convex lens substrate having a micro-aperture prepared as described above is, exactly same as the convex lens substrate 901 having a micro-aperture of the third example, spliced with the optical waveguide substrate 301. Accordingly, same as the third example, it is made possible to reproduce the information stored in a storage medium and to write the same onto a storage medium.

Therefore, as described hereinbefore, according to the process of producing near-field light generating element of the fourth example, in addition to the advantages of the second and third examples, as it is made possible to prepare the convex-shaped portion directly without using chemical etching, number of processes is reduced. It is made possible to prevent the performance of the near-field light generating element from decreasing such as a decrease of positional displacement and to provide the near-field light generating element excellent in mass-production at a low cost.

### [Fifth Example]

The process of producing near-field light generating element according to a fifth example is, as shown in FIG.1, comprised of optical guide structure forming process 101, convex forming luminous flux irradiation process 102, convex-shaped mask forming process 103, convex forming process 104 and micro-aperture forming process 105. In the fifth example, the convex-shaped portion is prepared after fixing the optical waveguide substrate prepared in the third example and the convex-lens substrate interposing a spacer there between. Accordingly, description about a part identical as the third example will be partially omitted or it will be made just simply.

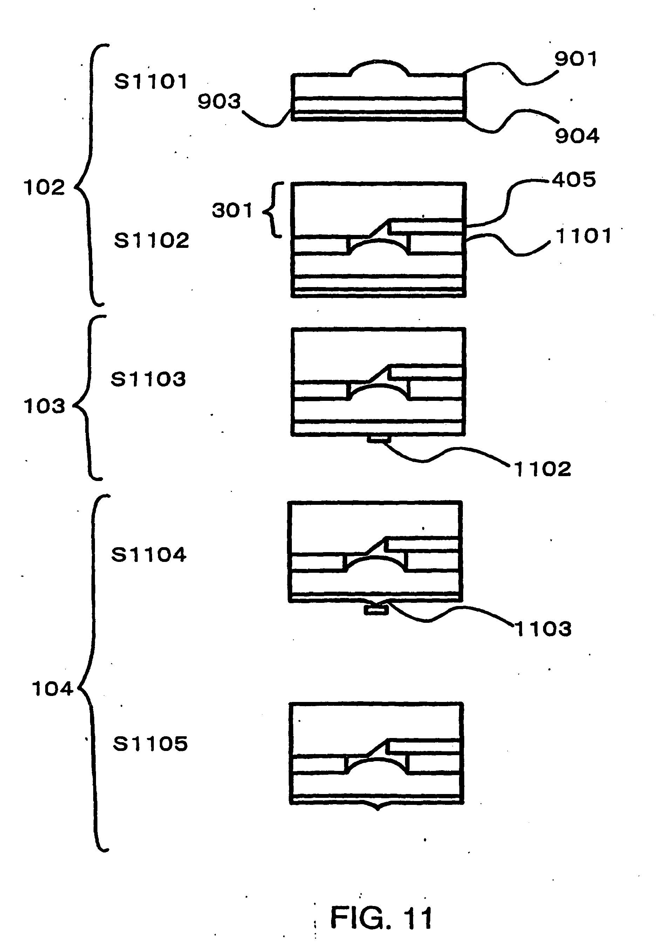

FIG. 11 shows a diagram illustrating the process of producing near-field light generating element according to the fifth example.

First, as for the optical guide structure forming process 101, as the optical waveguide substrate described in the first embodiment is used, a description thereof is omitted.

Next, in the convex forming luminous flux irradiation process 102 shown in FIG.11, a description will be made about a process of integrating the convex lens substrate 901 and the optical waveguide substrate 301 that are necessary to generate exposure light for forming the convex configuration. The convex lens substrate 901 in the step S1101 is laminated with a TEOS film 903 and a resist film 904 in this order on the opposite side of the convex lens. After that, in the step S1102, the optical waveguide substrate 301 and the convex lens substrate 901 are spliced interposing with a spacer 1101 there between so that, as described in the first embodiment, luminous flux emitted from the optical waveguide substrate 301 is fed to the convex lens.

Next, referring to FIG.11, a description will be made about the convex-shaped mask forming process 103.

To the substrate that is the optical waveguide substrate 301 prepared in the step S1102 spliced with the convex lens substrate 901, light is inputted from the incidence end of the optical waveguide 405. In the step S1103, the luminous flux emitted from the optical waveguide 405 is reflected on the incline of the optical waveguide substrate 301, condensed by the convex lens irradiated to the resist film 904 and thus the resist film 904 is exposed. After that, by means of a lithography technique, a mask 1102 is formed. Although it is not shown in the figure, in case where a near-field light generating element is used as a flying head commonly used in HDD or the like, a mask having a necessary structure for the flying head may be prepared by exposing on the surface of TEOS film 903 again using the photolithography technique.

Next, referring to FIG. 11. a description will be made about the convex forming process 104.

Based on the mask 1102 prepared in the step S1103, in the step S1104, in the same manner as the embodiment 1, in a way of a chemical etching the convex-formed portion 1103 is formed and unnecessary mask is removed in the step S1105.

Finally, a description will be made about the micro-aperture forming process 105.

On the surface of the TEOS film 903 having the convex-formed portion 1103 prepared in the step S1105, metal film is formed. Then, in the same manner as the first embodiment, a micro-aperture is formed to the metal film on convex-formed portion 905. Also, same as the first embodiment, the upper surface of the metal film is laminated with a dielectric film as a protection film.

The example described hereinbefore is for a case where the convex-shaped portion formed with the micro-aperture is only one. In the same manner, it is possible to prepare simultaneously a plurality of convex-shaped portions formed with the micro-aperture.

The near-field light generating element thus produced is capable to reproduce information stored in a storage medium, to write information in a storage medium and to observe the surface of a sample.

Therefore, as described above, according to the fifth example, of the process of producing near-field light generating element, in addition to the third example, as the convex-shaped portion having a micro-aperture is formed using luminous flux emitted from the optical waveguide, it is not necessary to carry out fine positional adjustment between the optical waveguide and the convex lens substrate. Accordingly, it is made possible to reduce largely time and works necessary for adjustment. While preventing the performance of the near-field light generating element from decreasing such as a decrease of optical efficiency due to provide a near-field light generating element excellent in mass production at a low cost.

### [Sixth Example]

The process of producing near-field light generating element according to a sixth example is, as shown in FIG. 1, comprised of optical guide structure forming process 101, convex forming luminous flux irradiation process 102, convex-shaped mask forming process 103, convex forming process 104 and micro-aperture forming process 105. As the sixth example is a case in which the convex-shaped portion is prepared by flattening the upper face of the optical waveguide substrate 301 described in the first embodiment, description about a part identical as the first embodiment will be partially omitted or will be made just simply.

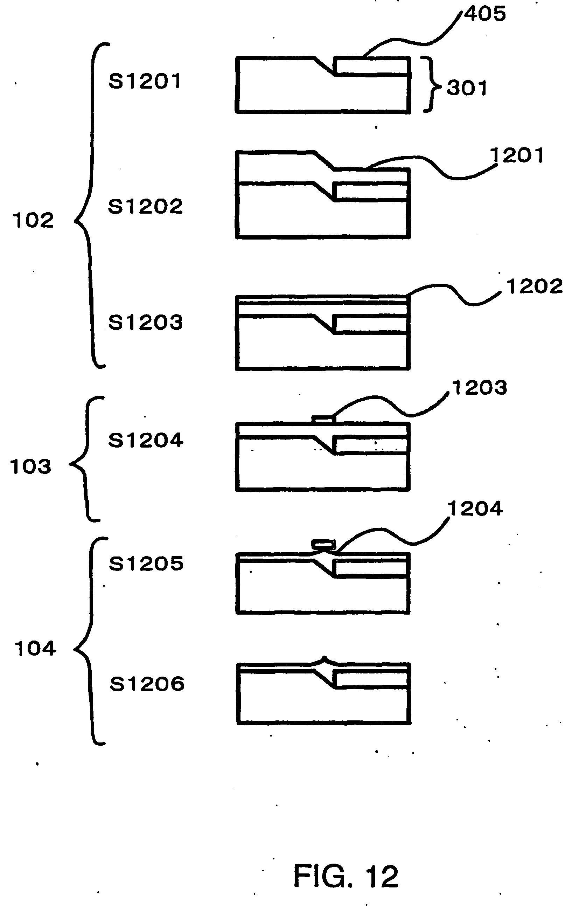

FIG. 12 shows a diagram illustrating the process of producing near-field light generating element according to the sixth example.

As for the optical guide structure forming process 101, as the optical waveguide substrate described in the first embodiment shown in FIG. 4, a description thereof is omitted.

Next, referring to FIG.12, a description will be made about the convex forming luminous flux irradiation process 102. First of all, in the step S1201, the optical waveguide substrate 301 described in the first embodiment is used. In the step S1202, the optical reflection layer of the incline and the upper surface of the optical waveguide 405 are laminated with a TEOS film 1201 in a way of CVD. Another dielectric material may be used without any problem. Then, in the step S1203, the surface of the TEOS film having difference in level is grinded so as to be flat.

Next, referring to FIG.12, a description will be made about the convex-shaped mask forming process 103.

On the flattened TEOS film 1201 of the substrate prepared in the step 51203, a resist film 1202 is formed. In the step S1204, light is inputted from the incidence end of the optical waveguide 405. The luminous flux emitted from the optical waveguide 405 is reflected on the incline of the optical waveguide substrate 301, irradiated onto the resist film 1202 and finally the resist film 1202 is exposed. After that, a mask 1203 is formed by means of photolithography. Although it is not shown in the figure, in case where a near-field light generating element is used as a flying head commonly used in HDD or the like, a mask having a necessary structure for the flying head may be prepared by exposing the surface of TEOS film 1201 again using the photolithography technique.

Next, referring to FIG.12, a description will be made about the convex forming process 104.

Based on the Mask 1203 prepared in the step S1204, in the same manner as the other embodiments and examples in the step S1205, a convex-formed portion 1204 is formed by means of a chemical etching and unnecessary mask is removed in the step S1206.

Finally, referring to FIG.12, a description will be made about the micro-aperture forming process 105.

On the surface of the TEOS film having the convex-formed portion 1204 prepared in the step S1206 is laminated with metal film. Then, in the same manner as described in the first embodiment, a micro-aperture is formed to the metal film on the Convex-formed portion 1204. Also, same the first embodiment, on the metal film, a dielectric film is formed as a protection film.

The near-field light generating element thus produced is capable to reproduce information stored in a storage medium, to write information in a storage medium and to observe the surface of a sample.

It is made possible to reduce the optical distance between the outgoing end of the optical waveguide 405 and the micro-aperture of the convex-formed portion 1204 by virtue of the near-field light generating element structured as described above. For example, by making the thickness of the laminated silicon oxide film to approximately 10µm, the distance there between can be set to 10µm or less. Accordingly, it is made possible to irradiate the propagation light to the micro-aperture as it the diameter of the beam spot there of is small, which becomes larger in proportion to the distance. Consequently, a larger quantity of near-field light can be generated. Further, in the process of the near-field light generating element is comprised of forming of films on the identical of the substrate and processing of thin films using photolithography, only but not includes such process as splicing etc. Accordingly, it is not necessary to carry out splicing as the fifth example.

Further, in this example, although any parts that have lens effect such as a plane micro lens, a convex lens or refractive index profile lens are not included, it is made possible to form a part that has lens effect between the micro-aperture and the optical waveguide 405 by forming the TEOS film thicker and using a manner such as ion exchange or chemical etching.

Therefore, as described hereinbefore, according to the process of producing near-field light generating element of the sixth example, in addition to the advantages described above, as it is not necessary to splice more than two substrates and to adjust and fix the same, it is made possible to eliminate completely the disadvantages of positional displacement due to splicing work. Consequently, it is made possible to reduce largely the time and works necessary for adjustment. While preventing the performance of the near-field light generating element from decreasing such as a decrease in optical efficiency due to positional displacement, it is made possible to provide a near-field light generating element excellent in mass-production at a low cost.

As described hereinbefore, according to the process of producing near-field light generating element of the first embodiment of the invention, to form the convex-shaped portion, conventionally, it is necessary to form photomasks used in photo processing for forming a mask for forming the convex-shaped portion on the both sides of the substrate and a mask for forming the optical guide structure for guiding luminous flux from the top of the near-field light generating element substrate to the convex-shaped portion. Also, an extremely precise positioning of the photomask on the both sides of the substrate is required. However, in the invention, as the convex-shaped portion is formed by using luminous flux irradiated from the optical guide structure, the photomask to form the convex-shaped portion is not necessary as well as an extremely precise positioning of the photomask can be eliminated. Furthermore, as the vertex of the convex-shaped portion always coincides with the axis of the luminous flux and the micro-aperture formed at the vertex of the convex-shaped portion coincides with the axis of the luminous flux coming from the optical guide structure, it is not necessary to carry out positioning. Accordingly, the performance of the near-field light generating element is prevented from decreasing such as a decrease of optical efficiency due to positional displacement. Still further, as the photomasks used in the silicon processing of the near-field light generating element production can be reduced in number, it is made possible to provide the near-field light generating element that is excellent in mass production at a low cost.

As described hereinbefore, according to the process of producing near-field light generating element of the first example, in addition to the advantages described above, as the convex-shaped mask can be formed without using any photomask, during forming the convex-shaped portion, the mask for forming the convex-shaped portion always coincides with the axis of luminous flux coming from the optical guide structure and the micro-aperture formed at the vertex of the convex-formed optical propagation component coincides with the axis coming from the optical guide structure. Accordingly, it is not necessary to carry out positioning between them. Further, as the near-field light generating element can be produced using semiconductor processing only, it is made possible to provide the near-field light generating element that is excellent in mass production at a low cost.

As described hereinbefore, according to the process of producing near-field light generating element of the second example, after integrating the substrate having the optical guide structure and the substrate to be formed with the micro-aperture into one, by forming the mask for forming the convex-shaped portion using luminous flux coming from an optical structure such as a lens or an optical waveguide, the vertex of the convex-formed optical propagation component coincides with the axis of luminous flux coming from the optical guide structure. Accordingly, in addition to the advantages described above, as the micro-aperture formed at the vertex of the convex-formed optical propagation component coincides with the axis of luminous flux coming from the optical guide structure, it is not necessary to carry out positioning between the micro-aperture formed at the vertex of the convex-formed optical propagation component and the axis of luminous flux coming from the optical structure. Furthermore, as the micro-aperture can be formed on the substrate of the optical guide structure, number of production processes can be reduced. Accordingly, it is made possible to provide the near-field light generating element that is excellent in mass production at a low cost.

As described hereinbefore, according to the process of producing near-field light generating element of the third example, after forming the optical propagation component on the substrate that has the optical guide structure and flattening the same, by forming the convex-formed optical propagation component using luminous flux coming from an optical structure such as an optical waveguide, the vertex of the convex-formed optical propagation component coincides with the axis of luminous flux coming from the optical guide structure. Accordingly, in addition to the advantages described above, as the vertex of the convex-formed optical propagation component coincides with the axis of luminous flux coming from the optical guide structure, it is not necessary to carry out positioning between the vertex of the convex-formed optical propagation component and the axis of luminous flux coming from the optical guide structure. Furthermore, as the micro-aperture can be formed on the substrate of the optical guide structure, number of production processes can be reduced. Accordingly, it is made possible to provide the near-field light generating element that is excellent in mass production at a low cost.

As described hereinbefore, according to the process of producing near-field light generating element of the fourth example, in addition to the advantages described above, by forming the substrate having the convex-shaped portion and the substrate having the optical guide structure separately and fixedly assembling them together, it is made possible to select the most appropriate substrates for forming respective substrates, for example, thickness, accuracy, quality, and forming process, etc. Accordingly, it is made possible to produce the near-field light generating element using a high precise substrate for forming the convex-shaped portion, and a relatively low precise substrate for forming the optical guide structure, without any problem in performance thereof. Consequently, it is made possible to further reduce the cost.

As described hereinbefore, according to the process of producing near-field light generating element of the fifth example, as an optical structure, by forming an optical structure such as a lens that has lens effect, in addition to the advantages described above, it is made possible to condense luminous flux adjacent to the micro-aperture resulting in a higher optical efficiency. Accordingly, it is made possible to provide the near-field light generating element easily at a low cost.

As described hereinbefore, according to the process of producing near-field light generating element of the sixth example, in addition to the advantages described above, as the convex-shaped portion is conical in shape, it is made possible to form easily at the front edge thereof a micro-aperture with a smaller diameter resulting in an increase of recording/reproducing (observation) density.

## Claims

1. A process of producing a near-field light generating element having a convex-shaped portion (507), the near-field light generating element being comprised of a convex-formed optical propagation compronent (503) in the form of a film, a micro-aperture formed at the vertex of the convex-shaped portion, and an optical guide structure for introducing light to the micro aperture or for guiding scattered light coming from the micro-aperture to a light receiving element, the process comprising the steps of:
forming the optical guide structure (301, 405);
forming (S501) the optical propagation component (503) on a single-crystal substrate (502), whereby a first surface of the optical propagation component is in contact with the substrate; forming (S503) by photolitography and wet-etching, such that an etching acte of a (111) face of the substrate is slow, a tapere hole (504) in the substrate (502), the taper terminating in a smaller end of the hole at the first surface of the optical propagation component (503);
forming (S504) a resist film (505) on a second surface of the optical propagation component (503) opposite the first surface;
introducing a luminous flux through the tapered hole from a target end thereof, the luminous flux having a high transmittance relative to the optical propagation component (503) and a low transmittance relative to the substrate (502), a part of the luminous flux in the centre of the tapered hole (504) having a higher energy than in other parts of the tapered hole (504), a portion of the resist film (505) opposite the tapered hole (504) being thereby exposed to the luminous flux;
forming (S505) art of the resist film a mask (506) corresponding to the portion of the resist film (505) opposite the tapered hole (504), the mask (506) having a convex shape due to the higher energy of the luminous flux in the centre of the tapered hole (504);
dry-etching the optical propagation component (503), such as to form (S506) the convex-shaped portion (507) in a part of the optical propagation component (503) lying under the convex-shaped mask (506), the convexity of the convex-shaped portion (507) arising from the convexity of the convex-shaped mask (506),
forming the micro-aperture at the vertex of the convex-shaped portion, and
assembling the optical guide structure (301, 405) and the substrate (502) together and fixing then to each other, so as to allow luminous flux to pass between the optical guide structure and the micro aperture

2. A process of producing a near-field light generating element according to claim 1,
wherein the step of forming the optical guide structure (301, 405) includes a step of forming the optical guide structure having beam-condensing effect.

3. A process of producing a near field light generating element according to claim 1 or claim 2, wherein the convex-shaped portion (1005; 507) is conical in form.

4. A process of producing a near-field light generating element according to any of claim 1 to claim 3, wherein the convex-shaped portion (1005; 507) is a convex lens in form having refractive index profile.

5. A process of producing a near-field light generating element according to any of claim 1 to claim 4, wherein a plurality of micro apertures are formed simultaneously at the convex-shaped portion (1005; 507) and the vertexes of the convex-shaped portions (1005; 507).

## Patentansprüche

1. Verfahren zum Erzeugen eines Nahfeldlichterzeugungselements mit einem konvex geformten Abschnitt (507), wobei das Nahfeldlichterzeugungselement aus einer konvex gebildeten Lichtfortpflanzungskomponente (503) in der Form eines Films, einer Mikroapertur, die am Scheitelpunkt des konvex geformten Abschnitts gebildet ist, und einer Lichtleiterstruktur zum Einführen von Licht in die Mikroapertur oder zum Leiten gestreuten Lichts, das von der Mikroapertur kommt, zu einem Lichtempfangselement besteht, wobei das Verfahren folgende Schritte umfasst:
Bilden der Lichtleiterstruktur (301, 405);
Bilden (S501) der Lichtfortpflanzungskomponente (503) auf einem Einzelkristallsubstrat (502), wobei eine erste Oberfläche der Lichtfortpflanzungskomponente mit dem Substrat in Kontakt steht;
Bilden, durch Photolithografie und Nassätzen, so dass eine Ätzrate einer (111) Fläche des Substrates langsam ist, einer konisch zulaufenden Öffnung (504) in dem Substrat (502), wobei die konisch zulaufende Form in einem kleineren Ende der Öffnung an der ersten Oberfläche der Lichtfortpflanzungskomponente (503) endet;
Bilden (S504) eines Resistfilms (505) auf einer zweiten Oberfläche der Lichtfortpflanzungskomponente (503) gegenüber der ersten Oberfläche;
Einführen eines Lichtstroms durch die konisch zulaufende Öffnung von einem größeren Ende derselben, wobei der Lichtstrom einen hohen Durchlässigkeitsgrad relativ zu der Lichtfortpflanzungskomponente (503) aufweist und einen geringen Durchlässigkeitsgrad relativ zu dem Substrat (502), wobei ein Teil des Lichtstroms in der Mitte der konisch zulaufenden Öffnung (504) eine höhere Energie aufweist als in anderen Teilen der konisch zulaufenden Öffnung (504), wobei ein Abschnitt des Resistfilms (505) gegenüber der konisch zulaufenden Öffnung (504) **dadurch** dem Lichtstrom ausgesetzt ist;
Bilden (505) einer Maske (506) aus dem Resistfilm, die dem Abschnitt des Resistfilms (505) gegenüber der konisch zulaufenden Öffnung (504) entspricht, wobei die Maske (506) aufgrund der höheren Energie des Lichtstroms in der Mitte der konisch zulaufenden Öffnung (504) eine konvexe Form aufweist;
Trockenätzen der Lichtfortpflanzungskomponente (503), so dass der konvex geformte Abschnitt (507) in einem Teil der Lichtfortpflanzungskomponente (503), der unter der konvex geformten Maske (506) liegt, gebildet wird (S506) wobei die Konvexität des konvex geformten Abschnitts (507) aus der Konvexität der konvex geformten Maske (506) resultiert;
Bilden der Mikroapertur an dem Scheitelpunkt des konvex geformten Abschnitts und
Zusammenfügen der Lichtleiterstruktur (301, 405) und des Substrats (502) und anschließend gegenseitiges Befestigen, so dass der Lichtstrom zwischen der Lichtleiterstruktur und der Mikroapertur hindurchgehen kann.

2. Verfahren zum Erzeugen eines Nahfeldlichterzeugungselements nach Anspruch 1, wobei der Schritt des Bildens der Lichtleiterstruktur (301, 405) einen Schritte des Bildens der Lichtleiterstruktur mit Strahlen kondensierender Wirkung enthält.

3. Verfahren zum Erzeugen eines Nahfeldlichterzeugungselements nach Anspruch 1 oder Anspruch 2, wobei der konvex geformte Abschnitt (1005; 507) eine konische Form aufweist.

4. Verfahren zum Erzeugen eines Nahfeldlichterzeugungselements nach einem der Ansprüche 1 bis 3, wobei der konvex geformte Abschnitt (1005; 507) die Form einer konvexen Linse mit einem Brechungsindexprofil aufweist.

5. Verfahren zum Erzeugen eines Nahfeldlichterzeugungselements nach einem der Ansprüche 1 bis 4, wobei eine Vielzahl von Mikroaperturen gleichzeitig an dem konvex geformten Abschnitt (1005; 507) und den Scheitelpunkten der konvex geformten Abschnitte (1005; 507) gebildet wird.

## Revendications

1. Processus de production d'un élément de génération de lumière en champ proche ayant une partie de forme convexe (507), l'élément de génération de lumière en champ proche étant formé par un composant de propagation optique de forme convexe (503) sous forme d'une pellicule, une micro-ouverture formée au sommet de la partie en forme convexe, et une structure de guide optique pour introduire de la lumière dans la micro-ouverture ou pour guider de la lumière diffusée provenant de la micro-ouverture vers un élément de réception de lumière, le processus comprenant les étapes suivantes :
formation de la structure de guide optique (301, 405) ;
formation (S501) du composant de propagation optique (503) sur un substrat monocristallin (502), moyennant quoi une première surface du composant de propagation optique est en contact avec le substrat ;
formation (S503), grâce à de la photolithographie et d'une gravure chimique, d'un trou conique (504) dans le substrat (502), la conicité se terminant en une extrémité plus petite du trou dans la première surface du composant de propagation optique (503);
formation (S504) d'une pellicule de vernis (505) sur une deuxième surface du composant de propagation optique (503) opposée à la première surface ;
introduction d'un flux lumineux à travers le trou conique à partir d'une extrémité cible de celui-ci, le flux lumineux ayant un facteur de transmission élevé par rapport au composant de propagation optique (503) et un faible facteur de transmission par rapport au substrat (502), une partie du flux lumineux au centre du trou conique (504) ayant une énergie plus forte que dans d'autres parties du trou conique (504), une partie de la pellicule de vernis (505) opposée au trou conique (504) étant ainsi exposée au flux lumineux ;
formation (S505), à partir de la pellicule de vernis, d'un masque (506) correspondant à la partie de la pellicule de vernis (505) opposée au trou conique (504), le masque (506) ayant une forme convexe en raison de l'énergie plus forte du flux lumineux au centre du trou conique (504) ;
gravure sèche du composant de propagation optique (503), de manière à former (S506) la partie de forme convexe (507) dans une partie du composant de propagation optique (503) se situant en-dessous du masque de forme convexe (506), la convexité de la partie de forme convexe (507) provenant de la convexité du masque de forme convexe (506);
la formation d'une micro-ouverture sur la sommet de la partie en forme convexe, et
l'assemblage de la structure de guide optique (301, 405) et du substrat (502) et leur fixation l'un avec l'autre, de manière à permettre au flux lumineux de passer entre la structure de guide optique et la micro-ouverture.

2. Processus de production d'un élément de génération de lumière en champ proche selon la revendication 1, l'étape de formation de la structure de guide optique (301, 405) incluant une étape de formation de la structure de guide optique ayant un effet de concentration du faisceau.

3. Processus de production d'un élément de génération de lumière en champ proche selon la revendication 1 ou la revendication 2, la partie de forme convexe (1005, 507) étant de forme conique.

4. Processus de production d'un élément de génération de lumière en champ proche selon l'une quelconque des revendications 1 à 3, la partie de forme convexe (1005, 507) étant une lentille convexe avec une forme ayant un profil de l'indice de réfraction.

5. Processus de production d'un élément de génération de lumière en champ proche selon l'une quelconque des revendications 1 à 4, une pluralité de micro-ouvertures étant formées simultanément dans la partie de forme convexe (1005, 507) et les sommets des parties de forme convexe (1005; 507).
